# EUROPEAN PATENT SPECIFICATION

(11) **EP 2 957 565 B1**
(45) Date of publication and mention of the grant of the patent: **07.03.2018**
(21) Application number: 14172968.1
(22) Date of filing: 18.06.2014
(51) Int. Cl.: C07F 9/54

(54) **Methods for preparation of lycopenes from C-15 Wittig salts and methods for purification of high all-E containing and high 6Z containing C15-Wittig salts**
Verfahren zur Herstellung von Lycopinen aus C-15-Wittig-Salzen und Verfahren zur Reinigung von C15-Wittig-Salzen mit hohem All-E- und hohem 6Z-Gehalt
Procédés de préparation de lycopènes à partir de sels C-15 issus de réaction de Wittig et procédés de purification desdits sels ayant une teneur en all-E et 6Z élevée

(43) Date of publication of application: 23.12.2015
(73) Proprietor: Allied Biotech Corporation, Taipei City (TW)
(72) Inventor: Chiu, Haw-Shyi, Taoyuan County (TW); Lin, Po-Wei, Taoyuan County (TW)
(74) Representative: Winter, Brandl, Fürniss, Hübner, Röss, Kaiser, Polte - Partnerschaft mbB

(56) References cited:
- URS HENGARTNER ET AL: "Synthesis, Isolation, and NMR-Spectroscopic Characterization of Fourteen (Z)-Isomers of Lycopene and of Some Acetylenic Didehydro- and Tetradehydrolycopenes", HELVETICA CHIMICA ACTA, vol. 75, no. 6, 2 October 1992 (1992-10-02), pages 1848-1865, XP55149698, ISSN: 0018-019X, DOI: 10.1002/hlca.19920750611
- TAKEHARA ET AL.: "Characterization and Thermal Isomerization of (all-E)-Lycopene", J. AGRICULT FOOD CHEM, vol. 62, 19 December 2013 (2013-12-19), pages 264-269,
- "Commission Directive 2011/3/EU", OFIICIAL JOURNAL OF THE EUROPEAN UNION, 7 January 2011 (2011-01-07), pages L13/59-L13/63,
- EUROPEAN FOOD SAFETY JOURNAL, vol. 674, 2008, pages 1-66,
- "Lycopene (Synthetic)", FAO JECFA MONOGRAPHS, vol. 3, 2006,
- "Lycopene from BLAKESLEA TRISPORA", FAO JECFA MONOGRAPHS, vol. 3, 2006,
- SUSANNE RATH ET AL.: "Lycopene extract from tomato", UNPUBLISHED PAPER, 1992,

## Description

### FIELD OF THE INVENTION

The present invention relates to methods for preparation of lycopenes, especially to lycopenes with high all-*E* contents or high 6*Z* contents from C15-Wittig salts mixtures. In this invention, methods for extraction and purification of desired *E*/*Z* ratios in C15-Wittig salts are also disclosed.

### BACKGROUND OF THE INVENTION

Lycopene (also referred to as *Ψ,Ψ* -carotene) is one of the many carotenoids that exist in nature. Lycopene can be easily found in ripe tomato fruits, watermelons and pink grapefruits, giving them a characteristic red pigmentation. Lycopene obtained from raw tomatoes contains approximately 5% or more of cis-lycopene. According Schierle et al. 1997, lycopene obtained from raw tomatoes contains 94-96% of all-*E*-lycopene, 3-5% of 5*Z*-lycopene and a minor quantity of *Z*-isomers. Recent epidemiological studies show that lycopene as antioxidant may alleviate coronary heart disease and cancers of prostate, bladder, skin, digestive tract, breast and cervix.

Lycopene can be produced in two ways: extraction and synthesis. Biological lycopene is extracted either from fruits (such as tomatoes or watermelons) or from fungal biomass (such as *Blakeslea trispora*). Synthetic lycopene is manufactured through chemical synthesis. Lycopene produced by using synthesis process has lower all-*E* content than that extracted from *B. trispora.* The joint FAO (Food and Agriculture Organization of the United Nations)/WHO (World Health Organization) expert committee has established specifications for both synthetic lycopene and lycopene extracted from *B. trispora* at the 67th meeting of JECFA (2006). For synthetic lycopene, total lycopene content shall be higher than 96%, in which at least 70% must be all-*E*-lycopene and the remains are 5*Z*-lycopene and a minor quantity of *Z*-isomers. For lycopene extracted from *B. trispora,* the total lycopene content shall be higher than 95%, in which at least 90% must be all-*E*-lycopene and the remains are other carotenoids (β- and γ-carotene) for not more than 5%. These specifications indicate that lycopene extracted from *B. trispora* consists mainly of all-*E*-form, which no synthetic lycopene prepared using the nowadays technology may reach.

Pseudoionone is one of the starting materials for lycopene syntheses. It is a mixture of cis and trans isomers (also referred to as the cis/trans mixture). In general, pseudoionone cis/trans mixtures containing about 20% to 50% of all-*trans*-isomer and the remains of other *cis*-isomers are available in the market. A *cis*-pseudoionone will result in a *cis*-lycopene and an all-*trans*-pseudoionone will result in an all-*E*-lycopene, after the syntheses. In order to obtain higher all-*E* containing lycopene, a pseudoionone with higher *all-trans* content shall be used. Therefore, the all-*trans*-pseudoionone must first be separated from the pseudoionone cis/trans mixture before the syntheses. In the conventional technology, all-*trans*-pseudoionone is isolated from the cis/trans mixture by a fractional distillation operation. This purified all-*trans*-pseudoionone so obtained is then used to synthesize a C15 phosphonium salt to produce lycopene.

Unfortunately, the conventional synthesis process in producing the C15 phosphonium salts will cause a part of the all-*trans*-form to convert to *cis*-forms during the reaction. With the current technology, even the high all-*E* containing (90% to 95%) C15-OH (also referred to as 3,7,11-trimethyl-dodeca-1,4,6,10-tetraen-3-ol or vinyl-pseudoionol) is used, a product with only 65.2% to 71.1% of all-*E*-C15-Wittig salts, as well as 9.8% to 10.3% of 6*Z* and 8.2% to 10.8% of 2*Z* isomers, would be obtained. Clearly, the resulted products have lower *E* isomer/*Z* isomer ratios, which are about 3.4:1 to 3.8:1. Reference may be made to, for example, U.S. Pat. No. 6,603,045, U.S. Pat. No. 6,433,226, U.S. Pat. No. 6,187,959 and U.S. Pat. No. 2002/0,128,516. Such poor *E*/*Z* selectivity of C15 phosphonium salts is a challenge in producing a synthetic all-*E*-lycopene, with all-*E* content competitive to that of biological lycopenes extracted from natural sources such as *B. trispora.*

The other method for producing synthetic all-*E*-lycopenes uses thermal isomerization process that converts *Z*-isomers of lycopenes into all-*E*-lycopene. Reference may be made to U.S. Pat. No. 7,126,036 and U.S. Pat. No. 2004/0049082. This process increases the all-*E* content of the obtained lycopene from 53% to 73.4% - 87.8%.

Hengartner, U. et al. (Helvetica Chimica Acta, Vol. 75:1848-1865 (1992)) describes the preparation of C15-Wittig salts having high 6E or 6Z contents by treating cis/trans mixtures of C15-Wittig salts using ethyl acetate.

It has been found that all-*E*-C15-Wittig salts can be separated from the C15 phosphonium salt obtained from the reaction of cis/trans mixture, using a series of purification steps in aprotic solvents. According to the present invention, significantly high *E*/*Z* selectivity in the C15 phosphonium salts, with an *E* isomer/*Z* isomer ratio of greater than 15:1, may be realized. By reacting a C10-dialdehyde (also referred to as 2,7-dimethyl-2,4,6-octatriene-1,8-dial) with such high all-*E* content of C15-Wittig salts through a double Wittig reaction, a synthetic lycopene with all-*E* content for up to 95% may be produced. The obtained all-E content may even satisfy the all-*E* content specification for biological lycopenes. By switching the reactants from high all-*E* content of C15-Wittig salts to high 6*Z* content of C15 phosphonium salts, a synthetic lycopene with a 5*Z*-content of up to 97% is also obtained.

### SUMMARY OF THE INVENTION

According to the present invention, new methods for the preparation of all-*E*-lycopenes and 5*Z*-lycopenes are disclosed. The methods generally include the steps of purification of all-E-C15-Wittig salts and synthesis of all-*E*-Lycopene and 5Z-Lycopene using the purified all-E-C15-Wittig salts. According to this invention, by changing the combination of solvents used and the reaction temperature, C15-Witting salts of a variety of **E** isomer/Z isomer ratio may be obtained. The invented methods may further comprise synthesis of C15-OH, to be used as material for the all-*E*-C15-Wittig salts.

In the purification of all-*E*-C15-Wittig salts, a C15 Wittig salt cis/trans mixture, preferably a C15 phosphonium salt cis/trans mixture, containing about 40% of all-*E* content is first obtained. The C15 Wittig salt cis/trans mixture is preferably a product of synthesis of all-*E*-C15-Witting salts, whereby it contains both cis and trans forms of isomers. The C15 Wittig salt cis/trans mixture is concentrated under vacuum to remove methanol and H₂O contained therein, whereby a C15-Wittig salt precipitate is obtained. An aprotic solvent is added to the precipitate for further concentration. The aprotic solvent may be ethyl acetate, chloroform, acetone, methyl ethyl ketone or methyl isobutyl ketone, or any combination thereof, and is preferably ethyl acetate. The concentration takes place at around 30°C for a relatively long period of time, such as 16 hours. A crystalized C15-Wittig salt precipitate is obtained. An aprotic solvent comprising acetone is later added to the precipitate for extraction of 6Z-C15-Wittig salts. The aprotic solvent may also include ethyl acetate, chloroform, acetone, methyl ethyl ketone or methyl isobutyl ketone, or any combination thereof, and is preferably acetone. The extraction operation takes place at between 0°C to 55°C, preferably 40°C to 50°C, for about 2 hours. After filtration, a wet cake of 6*Z*-C15-Wittig salt is obtained. The 6*Z*-C15-Wittig salt wet cake is removed and the filtrate is concentrated again, to obtain C 15-Wittig salts with an *E* isomer/*Z* isomer ratio of greater than 3:1.

In order to obtain C15-Wittig salts with high all-*E* contents, an aprotic solvent in either a pure solvent form or a solvent mixture form is added to the C15-Wittig salts, i.e, the filtrate after the wet cake of 6*Z*-C15-Wittig salt is removed after the filtration step, for crystallization. The aprotic solvent may be ethyl acetate, chloroform, acetone, methyl ethyl ketone or methyl isobutyl ketone, or any combination thereof, and is preferably an ethyl acetate/acetone mixture. The crystallization operation takes place at between 25°C to -30°C for a relatively long time, preferably 0°C to -20°C for about 16 hours. After filtration and drying, C15-Wittig salts with an *E* isomer/*Z* isomer ratio of greater than 15:1 are obtained.

In order to obtain C15-Wittig salts with high 6*Z* contents, the wet cake of 6*Z*-C15-Wittig salts obtained in the previous filtration step is rinsed in an aprotic solvent. The aprotic solvent may be acetone, methyl ethyl ketone or methyl isobutyl ketone, or any combination AL7902-0073 thereof, and is preferably acetone. The rinsing operation takes place at between 0°C to 55°C, preferably 40°C to 50°C, for about 2 hours. After filtration and drying, C15-Wittig salts with an *E* isomer/*Z* isomer ratio of less than 1:30 are obtained.

In the synthesis of lycopenes, i.e., all-*E*-lycopene and 5*Z*-lycopene, products obtained from the purification step are reacted with C10-dialdehyde in a double Wittig reaction. A base reactant may be added to proceed the reaction. After thermal isomerization and filtration, a lycopene wet cake is collected. The product is washed, rinsed, filtered and dried to obtain all-*E*-lycopene powders with an all-*E* content of up to 95%, or 5*Z*-lycopene powders with a 5*Z* content of up to 97%.

In the optional synthesis step of C15-OH, the C15 phosphonium salt cis/trans mixtures may be prepared by reacting vinyl-pseudoionol and triphenylphosphine with an inorganic or organic acid, preferably a strong inorganic or organic acid. The strong acid may be a hydrohalic acid such as hydrochloric acid and hydrobromic acid, sulfuric acid, phosphoric acid, sulfonic acid and other inorganic or any organic acid with a comparable degree of dissociation.

### DETAILED DESCRIPTION OF THE INVENTION

The present invention discloses novel methods for the preparation of all-*E*-lycopenes and 5*Z*-lycopenes. The invented methods feature in their capability of producing C15-Wittig salts with controllable *E* isomer/*Z* isomer ratios and synthesis of all-*E*-lycopenes and 5*Z*-lycopenes using the particular C15-Wittig salts. All-*E*-lycopenes with an all-*E* content of up to 95% or 5*Z*-lycopenes with a 5*Z* content of up to 97% are obtained by using the method of this invention.

The invented methods generally include the steps of purification of C15-Wittig salts and synthesis of all-*E*-lycopenes and 5*Z*-lycopenes using the purified C15-Wittig salts. In the purification of C15-Wittig salts, a C15 phosphonium salt cis/trans mixture is first obtained. The mixture is preferably a product from the synthesis of C15-Wittig salts, using the conventional synthesis methods. The mixture is first concentrated under vacuum to remove as much methanol/H₂O as possible, if it is produced in a previous synthesis step. After enough quantity of methanol/H₂O is removed, a C15-Wittig salt precipitate is emerged. The concentration takes place at around 30°C for a relatively long period of time, such as 16 hours.

According to this invention, by changing the combination of aprotic solvents used and the reaction temperature, C15-Witting salts of desired *E* isomer/*Z* isomer ratio may be obtained. For example, among the Wittig salts, both all-*E*-C15-Wittig salts and 6*Z*-C15-Wittig salts have poorer solubility than 2*Z*-C15-Wittig salts in ethyl acetate. On the other hand, both 2*Z*-C15-Wittig salts and all-*E*-C15-Wittig salts have much better solubility than 6*Z*-C15-Wittig salts in either acetone, methyl ethyl ketone or methyl isobutyl ketone. The solubility of 6*Z*-C15-Wittig salts in acetone, methyl ethyl ketone or methyl isobutyl ketone also varies with temperature. It is therefore possible to control the *E* isomer/*Z* isomer ratios in the resulted C15-Wittig salts by changing the combination of the aprotic solvents as well as the purification temperature.

An aprotic solvent comprising acetone is later added to the precipitate for extraction of 6Z-C15-Wittig salts. The aprotic solvent may also include ethyl acetate, chloroform, methyl ethyl ketone or methyl isobutyl ketone, or any combination thereof, and is preferably acetone. The extraction operation takes place at between 0°C to 55°C, preferably 40°C to 50°C, for about 2 hours. After filtration, a wet cake of 6Z-C15-Wittig salt is obtained. The 6Z-C15-Wittig salt wet cake is removed. The filtrate is again concentrated in an aprotic solvent, preferably ethyl acetate, to obtain C15-Wittig salts having an *E* isomer/*Z* isomer ratio of greater than 3:1. The E isomer content in the product is relatively low but the product is useful in direct reaction with a C10-dialdehyde without further purification, to produce a qualified (high all-*E* content) synthetic lycopene.

In order to obtain higher all-*E* content of C15-Wittig salts, an aprotic solvent in either a pure solvent form or a solvent mixture form is added to the C15-Wittig salts obtained in the previous extraction step for crystallization. The aprotic solvent is preferably ethyl acetate. The crystallization operation may take place under the temperature of between 25°C to -30°C for a predetermined period of time, preferably under 0°C to -20°C for, for example, 16 hours. The produced wet cake may be further purified in an ethyl acetate/acetone solvent. The.. products are filtered and dried to obtain high all-*E* content of C15-Wittig salts with an *E* isomer/*Z* isomer ratio of greater than 15:1.

In order to obtain C15-Wittig salts with high 6*Z* content, the wet cake of 6*Z*-C15-Wittig salts obtained in the above-mentioned extraction step is subjected to further purification. An aprotic solvent is added to the wet cake. Aprotic solvents applicable in this purification step include acetone, methyl ethyl ketone and methyl isobutyl ketone and any of their combinations. The purification is operated under the temperature of 0°C to 55°C, preferably 40°C to 50°C, for a period of time such as 2 hours. The products are filtered and dried to obtain a high 6*Z* content of C15-Wittig salts with an *E* isomer/*Z* isomer ratio of less than 1:30.

In the synthesis of lycopene, C10-dialdehyde is reacted with products of the purification steps. The high all-*E* content or high 6*Z* content of C15-Wittig salts obtained in the purification process is reacted with the C10-dialdehyde in a double Wittig reaction. A base reactant may be added to proceed the reaction. The product is then processed by thermal isomerization and filtration, to obtain a lycopene wet cake. Acetone and water are added separately for washing and rinsing treatments. After filtration and drying, all-*E*-lycopene powders with all-*E* content of up to 95% or 5*Z*-lycopene powders with 5*Z* content of up to 97% are obtained.

The invented methods may include optionally synthesis of C15-OH, to be used as the C15-Wittig salts. In the synthesis of C15-OH, a purified pseudoionone (Fluka, *E*/*Z* = 2.7:1) is reacted with vinyl magnesium chloride. Since the reactant, pseudoionone, is a cis/trans mixture, the produced C15-OH is also a cis/trans mixture and has the same level of *E* isomer/*Z* isomer ratio as in the pseudoionone. Thereafter, the C15-OH is reacted with a triphenylphosphine and a strong acid, to produce the desired C15 phosphonium salts. The resulted C15 phosphonium salt is also a cis/trans mixture, containing about 40% of all-*E* content.

According to the present invention, methods that produce C15-Wittig salts with almost any desirable *E* isomer/*Z* isomer ratio are provided. As a result, lycopenes with almost any desirable *E* isomer/*Z* isomer ratio of lycopene may also be prepared, using the C15-Wittig salts, purified according to this invention, as material. The present invention provides new methods of producing desirable synthetic lycopene.

In the followings, embodiments in the purification of C15-Wittig salts and in the synthesis of all-*E*-lycopenes and 5*Z*-lycopenes using the purified C15-Wittig salts will be illustrated.

### Preparation of C15-TPP salts with high all-E content or high 6Z content

### Example 1

250.0g of 3,7,11-trimethyldodeca-2,4,6,10-tetraen-1-yl- triphenylphosphonium chloride salt solution (purity 38.6% in methanol) with 40.9% of all-*E* content, 38.7%, of, 6*Z* content and 4.1% of 2*Z* content (E isomer/*Z* isomer ratio = 1:1) were concentrated by vacuum distillation at 30°C, to remove methanol solvent. Then 135 g of ethyl acetate were added. After concentration by vacuum distillation, 60g of ethyl acetate was added in addition. The salt solution was then heated to 30°Cand stirred for 16 hours. Thereafter, 120 g of acetone was added into the mixture. Temperature was raised to 50°Cand maintained for 2 hours then lowered to 30°C. The products were filtered to obtained solid phase 3,7,11-trimethyldodeca-2*E*,4*E*,6*Z*,10*E*- tetraen-1-yl-triphenylphosphonium chloride (6Z-C15TPPCl) salt wet cake in the amount of 48.5g (assay 6z-%= 73.3%; assay All E%=12%). The wet cake was removed and the filtrate was concentrated at 50°C by vacuum distillation. Thereafter, the concentrated filtrate was added 197g of ethyl acetate, cooled to -20°C and stirred for 16 hours. A 3,7,11-trimethyldodeca-2*E*,4*E*,6*E*,10*E*-tetraen-1-yl-triphenylphosphonium chloride salt wet cake was obtained by filtration. 167 ml of ethyl acetate and 33 ml of acetone were added to the obtained wet cake. The mixture was stirred at 25°C for 30 minutes then cooled to 5°C and stirred for 16 hours. After filtration and drying, 30g of 3,7,11-trimethyl-dodeca-2*E*,4*E*,6*E*,10*E*-tetraen-1-yl-triphenyl ,phosphonium chloride (All E- C15TPPC1) salt powder were obtained. HPLC analysis revealed that the powder contains 94.8% of all-*E* isomer, 3.3% of 6Z isomer, and 1.9% of 2*Z* isomer. The *E* isomer/Z isomer ratio is accordingly 18.2:1.

### Example 2

1,534.0g of a 3,7,11-trimethyldodeca-2,4,6,10-tetraen-1-yl-triphenylphosphonium chloride salt solution (purity 38.6% in methanol) with 42.6% of all-*E* isomer, 39.6% of 6*Z* and 2Z isomers (*E* isomer/*Z* isomer ratio = 1.1:1) were concentrated by vacuum distillation at 30°C, followed by adding 400 ml of ethyl acetate and stirring for 16 hours. 400 ml of acetone were added and the mixture was stirred for additional 2 hours. After filtration, the obtained 230g of solid phase 3,7,11-trimethyldodeca-2*E*,4*E*,6*Z*,10*E*-tetraen-1-yl-triphenylphosphonium chloride salt wet cake were removed and an filtrate was obtained. The filtrate was then concentrated by vacuum distillation at 45°C, to remove the solvent, whereby 640g of residue (purity of C15 salts: 55.2%) were obtained. HPLC analysis revealed that the residue contains 77.2% of all-*E* isomer, 13.8% of 6*Z* isomer and 9.0% of 2*Z* isomer. Its *E* isomer/*Z* isomer ratio is accordingly 3.4:1.

### Example 3

500.0g of 3,7,11-trimethyldodeca-2*E*,4*E*,6*Z*,10*E*-tetraen-1-yl-triphenylphosphonium chloride salt wet cake obtained from example 1, with 12.0% of all-*E* isomer, 73.3% of 6*Z* isomer and 0.3% of 2*Z* isomer (*E* isomer/*Z* isomer ratio = 1:6.1) was suspended in 1,000 ml of acetone. The salt solution was then heated to 40°C and stirred for 1 hour. After filtration and drying, 362.g of 3,7,11-trimethyldodeca-2*E*,4*E*,6*Z*,10*E*-tetraen-1-yl-triphenyl phosphonium chloride salt powder were obtained. HPLC analysis revealed that the powder obtained C15 phosphonium salt powder contained 2.9% of all-*E* isomer, 96.8% of 6*Z* isomer and 0.3% of 2*Z* isomer. The *E* isomer/*Z* isomer ratio is accordingly 1:33.5.

### Synthesis of all-E-Lycopene or 5Z-Lycopene

### Example 4

89.0g of 3,7,11-trimethyldodeca-2*E*,4*E*,6*E*,10*E*-tetraen-1-yl-triphenylphosphonium chloride salt powder (purity 95.2 %, *E* isomer/*Z* isomer ratio = 15.8:1) and 9.3g of 2,7-dimethyl-2,4,6-octatriene-1,8-dial were added into 90g of methanol. The temperature of the composition was raised to 30°C and maintained for 30 minutes. After 95g of an ethyl acetate/n-heptane (w/w = 1:1) solvent mixture were added, the solution mixture was cooled to room temperature. Then 175.5g of a potassium carbonate solution by dissolving 63.5g of potassium carbonate powder in 112g of water were added dropwise. The solution mixture was then heated to 60°C and maintained for 3 hours. Thereafter, the temperature of the solution mixture was raised to 100 °C to remove as much organic solvents as possible, then cooled to 80°C and maintained for 16 hours. After filtration, 94.3g of high all-*E*-lycopene wet cake were obtained. Acetone and water were added to the wet cake separately for washing and rinsing treatments. After filtration and drying, 24.5g of high all-*E*-lycopene crystal were obtained. HPLC analysis revealed the lycopene crystal contained 95.3% of all-*E*-lycopene, and 3.3% of 5*Z*-lycopene. UV assay of the lycopene = 101.0%.

### Example 5

50.0g of 3,7,11-trimethyldodeca-2*E*,4*E*,6*Z*,10*E*-tetraen-1-yl-triphenylphosphonium chloride salt powder (purity 89.8%, *E* isomer/*Z* isomer ratio = 1:33.1) and 5.4g of 2,7-dimethyl-2,4,6-octatriene-1,8-dial were added into 60 ml of methanol. The temperature of the composition was raised to 30°C and maintained for 30 minutes. After 55g of an ethyl acetate/n-heptane (w/w = 1:1) solvent mixture were added, the solution mixture was cooled to room temperature. Then 103.5g of a potassium carbonate solution by dissolving 37.5g of potassium carbonate powder in 66g of water were added dropwise. The solution mixture was heated to 60°C and maintained for 3 hours. Thereafter, the temperature of the solution mixture was raised to 100 °C to remove as much organic solvents as possible, then cooled to 80°C and maintained for 16 hours. After filtration 62.0g of 5*Z*-lycopene wet cake were obtained. Acetone and water were added to the wet cake separately for washing and rinsing treatments. After filtration and drying, 16.1g of high 5*Z*-lycopene containing crystal were obtained. HPLC analysis revealed the lycopene crystal contained 97.9% of 5*Z*-lycopene and 1.4% of other Z-isomers. U V assay of the lycopene = 100.5%.

### Example 6

203.0g of 3,7,11-trimethyldodeca-2,4,6,10-tetraen-1-yl-triphenylphosphonium chloride salt solution (purity 58.4%, *E* isomer/*Z* isomer ratio = 3.4:1) and 14.4 g of 2,7-dimethyl-2,4,6-octatriene-1,8-dial were added into 55ml of methanol. After 316ml of an ethyl acetate/*n*-heptane (w/w = 1:1) solvent mixture were added, the solution mixture was heated to 30°C. Then 470.0 g of a potassium carbonate solution by dissolving 170.0 g of potassium carbonate powder in 300g of water were added dropwise. The solution mixture was heated to 60°C and stirred for 3 hours. Thereafter, the temperature of the solution mixture was raised to 100 °C to remove as much organic solvents as possible, then cooled to 80°C and stirred for 16 hours. 95.9g of lycopene wet cake were obtained by filtration. Acetone and water were added to the wet cake separately for washing and rinsing treatments. After filtration and drying, 24.6g of synthetic lycopene crystal were obtained. HPLC analysis revealed the lycopene crystal contained 75.7% of all-*E*-lycopene, 19.2% of 5*Z*-lycopene and 3.1% of other *Z*-isomers. UV assay of the lycopene = 99.0%.

### EFFECTS OF THE INVENTION

Lycopene is one of the many carotenoids that may alleviate coronary heart disease and prevent from several kinds of cancers. It can be produced by way of either extraction or synthesis. Current synthesis processes can produce synthetic lycopenes with all-*E* content of merely 87%, which is much lower than that of the biological lycopene extracted from *B*. *trispora* /natural source. This invention makes the synthetic lycopene to meet the all-*E* content standard for biological lycopene extracted from *B. trisporal* natural source, by separating the all-*E*-C15-Wittig salts from the C15 phosphonium salts cis/trans mixture through a series of purification operations in aprotic solvents such as ethyl acetate, chloroform, acetone, methyl ethyl ketone, methyl isobutyl ketone, etc. The C15-Wittig salts so obtained include significantly high all-*E* content or high 6*Z* content. A C10-dialdehyde is then reacting with the high all-*E* containing or high 6*Z* containing C15 phosphonium salts in a double Wittig reaction, to obtain synthesized all-*E*-lycopenes or 5*Z*-lycopenes.

## Claims

1. A method for purification of C15-Wittig salts useful in the synthesis of lycopenes to obtain high all-*E* contents, comprising the steps of:
obtaining a C15-Wittig salt cis/trans mixture;
purifying the C15-Wittig salt cis/trans mixture to remove solvents;
adding an aprotic solvent to the C15 Wittig salt cis/trans mixture at a temperature of 0°C to 55°C to extract 6Z-C15-Wittig salts from the mixture;
removing the 6Z-C15-Wittig salts from the mixture to obtain residues; and
purifying the obtained residues to obtain C15-Wittig salts with high all-*E* contents;
**characterized in that** the aprotic solvent comprises acetone.

2. A method for purification of C15-Wittig salts useful in the synthesis of lycopenes to obtain high 6Z contents, comprising the steps of:
obtaining a C15-Wittig salt cis/trans mixture;
purifying the C15-Wittig salt cis/trans mixture to remove solvents;
adding an aprotic solvent to the C15 Wittig salt cis/trans mixture at a temperature of 0°C to 55°C to extract 6Z-C15-Wittig salts from the mixture; and
purifying the 6Z-C15-Wittig salts to obtain C15-Wittig salts with high 6Z contents;
**characterized in that** the aprotic solvent comprises acetone.

3. The method according to claim 1 or 2, wherein purification of the C15 Wittig salt cis/trans mixture includes adding an aprotic solvent to the C15 Wittig salt cis/trans mixture and stirring the composition at 30°C for over 10 hours.

4. The method according to claim 3, wherein the aprotic solvent for purification of C15 Wittig salt cis/trans mixture includes at least one selected from the group consisting of ethyl acetate, chloroform, acetone, methyl ethyl ketone and methyl isobutyl ketone.

5. The method according to claim 4, wherein the aprotic solvent for purification of C15 Wittig salt cis/trans mixture includes ethyl acetate.

6. The method according to claim 1, wherein purification of the residue includes adding an aprotic solvent to the C15 Wittig salt cis/trans mixture and stirring the composition at 25°C to -30°C for over 10 hours.

7. The method according to claim 6, wherein the aprotic solvent for purification of residue includes at least one selected from the group consisting of ethyl acetate, chloroform, acetone, methyl ethyl ketone and methyl isobutyl ketone.

8. The method according to claim 7, wherein the aprotic solvent for purification of residue includes ethyl acetate.

9. The method according to claim 1 or 2, wherein the C15-Wittig salt cis/trans mixture is obtained by reacting vinyl-pseudoionol and triphenylphosphine with an inorganic or organic acid.

10. The method according to claim 9, wherein the inorganic or organic acid is at least one selected from the group consisting of hydrochloric acid, hydrobromic acid, sulfuric acid, phosphoric acid and sulfonic acid.

11. The method according to claim 2, wherein purification of the 6Z-C15-Wittig salts includes adding an aprotic solvent to the C15 Wittig salt cis/trans mixture and stirring the composition at 0°C to 55°C, to obtain crystallized 6Z-C15-Wittig salts.

12. The method according to claim 11, wherein the aprotic solvent for purification of 6Z-C15-Wittig salts includes acetone.

13. The method of any of claims 1-12, further comprising the step of reacting the obtained C15-Wittig salts with C10-dialdehyde in a double Wittig reaction for synthesis of lycopenes.

14. The method of claim 13, wherein the synthesis reaction is conducted in a base reactant.

## Patentansprüche

1. Verfahren zur Reinigung von für die Synthese von Lycopinen verwendbaren C15-Wittig-Salzen zum Erhalt von hohen all-*E*-Gehalten, umfassend die Schritte:
Erhalten einer cis/trans-Mischung von C15-Wittig-Salzen;
Reinigen der cis/trans-Mischung von C15-Wittig-Salzen zum Entfernen von Lösemitteln;
Zugeben eines aprotischen Lösemittels zu der cis/trans-Mischung von C15-Wittig-Salzen bei einer Temperatur von 0°C bis 55°C zum Extrahieren von 6Z-C15-Wittig-Salzen aus der Mischung;
Entfernen der 6Z-C15-Wittig-Salze aus der Mischung zum Erhalt von Rückständen; und
Reinigen der erhaltenen Rückstände zum Erhalt von C15-Wittig-Salzen mit hohen all-*E-*Gehalten;
**dadurch gekennzeichnet, dass** das aprotische Lösemittel Aceton umfasst.

2. Verfahren zur Reinigung von für die Synthese von Lycopinen verwendbaren C15-Wittig-Salzen zum Erhalt von hohen 6Z-Gehaltens, umfassend die Schritte:
Erhalten einer cis/trans-Mischung von C15-Wittig-Salzen;
Reinigen der cis/trans-Mischung von C15-Wittig-Salzen zum Entfernen von Lösemitteln;
Zugeben eines aprotischen Lösemittels zu der cis/trans-Mischung von C15-Wittig-Salzen bei einer Temperatur von 0°C bis 55°C zum Extrahieren von 6Z-C15-Wittig-Salzen aus der Mischung; und
Reinigen der 6Z-C15-Wittig-Salze zum Erhalt von C15-Wittig-Salzen mit hohen 6Z-Gehalten;
**dadurch gekennzeichnet, dass** das aprotische Lösemittel Aceton umfasst.

3. Verfahren nach Anspruch 1 oder 2, wobei Reinigung der cis/trans-Mischung von C15-Wittig-Salzen Zugeben eines aprotischen Lösemittels zu der cis/trans-Mischung von C15-Wittig-Salzen und Rühren der Zusammensetzung für über 10 Stunden bei 30°C beinhaltet.

4. Verfahren nach Anspruch 3, wobei das aprotische Lösemittel zur Reinigung der cis/trans-Mischung von C15-Wittig-Salzen wenigstens eines enthält, das ausgewählt ist aus der Gruppe bestehend aus Ethylacetat, Chloroform, Aceton, Methylethylketon und Methylisobutylketon.

5. Verfahren nach Anspruch 4, wobei das aprotische Lösemittel zur Reinigung der cis/trans-Mischung von C15-Wittig-Salzen Ethylacetat enthält.

6. Verfahren nach Anspruch 1, wobei Reinigung des Rückstands Zugeben eines aprotischen Lösemittels zu der cis/trans-Mischung von C15-Wittig-Salzen und Rühren der Zusammensetzung für über 10 Stunden bei 25°C bis -30°C beinhaltet.

7. Verfahren nach Anspruch 6, wobei das aprotische Lösemittel zur Reinigung von Rückstand wenigstens eines enthält, das ausgewählt ist aus der Gruppe bestehend aus Ethylacetat, Chloroform, Aceton, Methylethylketon und Methylisobutylketon.

8. Verfahren nach Anspruch 7, wobei das aprotische Lösemittel zur Reinigung von Rückstand Ethylacetat enthält.

9. Verfahren nach Anspruch 1 oder 2, wobei die cis/trans-Mischung von C15-Wittig-Salzen durch Umsetzen von Vinylpseudoionol und Triphenylphosphin mit einer anorganischen oder organischen Säure erhalten wird.

10. Verfahren nach Anspruch 9, wobei die anorganische oder organische Säure wenigstens eine ist, die ausgewählt ist aus der Gruppe bestehend aus Chlorwasserstoffsäure, Bromwasserstoffsäure, Schwefelsäure, Phosphorsäure und Sulfonsäure.

11. Verfahren nach Anspruch 2, wobei Reinigung der 6Z-C15-Wittig-Salze Zugeben eines aprotischen Lösemittels zu der cis/trans-Mischung von C15-Wittig-Salzen und Rühren der Zusammensetzung bei 0°C bis 55°C zum Erhalt von kristallisierten 6Z-C15-Wittig-Salzen beinhaltet.

12. Verfahren nach Anspruch 11, wobei das aprotische Lösemittel zur Reinigung von 6Z-C15-Wittig-Salzen Aceton enthält.

13. Verfahren nach einem der Ansprüche 1-12, weiterhin umfassend den Schritt des Umsetzens der erhaltenen C15-Wittig-Salze mit C10-Dialdehyd in einer doppelten Wittig-Reaktion zur Synthese von Lycopinen.

14. Verfahren nach Anspruch 13, wobei die Synthesereaktion in einem basischen Reaktanten durchgeführt wird.

## Revendications

1. Procédé de purification de sels de Wittig C15 utiles dans la synthèse de lycopènes pour obtenir des teneurs élevées de tous les *E,* comprenant les étapes de :
obtention d'un mélange cis/trans de sels de Wittig C15 ;
purification du mélange cis/trans de sels de Wittig C15 pour éliminer les solvants ;
addition d'un solvant aprotique au mélange cis/trans de sels de Wittig C15 à une température de 0°C à 55°C pour extraire les sels de Wittig 6Z-C15 du mélange ;
élimination des sels de Wittig en 6Z-C15 du mélange pour obtenir des résidus ; et
purification des résidus obtenus pour obtenir des sels de Wittig C15 avec des teneurs élevées de tous les *E;*
**caractérisé en ce que** le solvant aprotique comprend de l'acétone.

2. Procédé de purification de sels de Wittig C15 utiles dans la synthèse de lycopènes pour obtenir des teneurs élevées en 6Z, comprenant les étapes de :
obtention d'un mélange cis/trans de sels de Wittig C15 ;
purification du mélange cis/trans de sels de Wittig C15 pour éliminer les solvants ;
addition d'un solvant aprotique au mélange cis/trans de sels de Wittig C15 à une température de 0°C à 55°C pour extraire des sels de Wittig 6Z-C15 du mélange ; et
purification des sels de Wittig 6Z-C15 pour obtenir des sels de Wittig C15 avec des teneurs élevées en 6Z ;
**caractérisé en ce que** le solvant aprotique comprend de l'acétone.

3. Procédé selon la revendication 1 ou 2, dans lequel la purification du mélange cis/trans de sels de Wittig C15 comprend l'addition d'un solvant aprotique au mélange cis/trans de sels de Wittig C15 et l'agitation de la composition à 30°C pendant plus de 10 heures.

4. Procédé selon la revendication 3, dans lequel le solvant aprotique pour purification du mélange cis/trans de sels de Wittig C15 comprend au moins un choisi dans le groupe constitué d'acétate d'éthyle, chloroforme, acétone, méthyléthylcétone et méthylisobutylcétone.

5. Procédé selon la revendication 4, dans lequel le solvant aprotique pour purification de mélange cis/trans de sels de Wittig C15 comprend de l'acétate d'éthyle.

6. Procédé selon la revendication 1, dans lequel la purification du résidu comprend l'addition d'un solvant aprotique au mélange cis/trans de sels de Wittig C15 et l'agitation de la composition à de 25°C à -30°C pendant plus de 10 heures.

7. Procédé selon la revendication 6, dans lequel le solvant aprotique pour purification de résidu comprend au moins un choisi dans le groupe constitué d'acétate d'éthyle, chloroforme, acétone, méthyléthylcétone et méthylisobutylcétone.

8. Procédé selon la revendication 7, dans lequel le solvant aprotique pour purification de résidu comprend l'acétate d'éthyle.

9. Procédé selon la revendication 1 ou 2, dans lequel le mélange cis/trans de sels de Wittig C15 est obtenu par réaction de vinyl-pseudoionol et de triphénylphosphine avec un acide inorganique ou organique.

10. Procédé selon la revendication 9, dans lequel l'acide inorganique ou organique est au moins un choisi dans le groupe constitué d'acide chlorhydrique, d'acide bromhydrique, d'acide sulfurique, d'acide phosphorique et d'acide sulfonique.

11. Procédé selon la revendication 2, dans lequel la purification des sels de Wittig 6Z-C15 comprend l'addition d'un solvant aprotique au mélange cis/trans de sels de Wittig C15 et l'agitation de la composition à de 0°C à 55°C, pour obtenir des sels de Wittig 6Z-C15 cristallisés.

12. Procédé selon la revendication 11, dans lequel le solvant aprotique pour purification de sels de Wittig 6Z-C15 comprend de l'acétone.

13. Procédé selon l'une quelconque des revendications 1-12, comprenant de plus l'étape de réaction des sels de Wittig C15 obtenus avec un dialdéhyde en C10 dans une réaction de Wittig double pour la synthèse de lycopènes.

14. Procédé selon la revendication 13, dans lequel la réaction de synthèse est réalisée dans un réactif de base.
